(19) Europäisches Patentamt

European Patent Office

Office européen des brevets

(11) **EP 3 657 618 B1**

(12) **EUROPEAN PATENT SPECIFICATION**

(45) Date of publication and mention
of the grant of the patent:
**23.03.2022 Bulletin 2022/12**

(21) Application number: **18207941.8**

(22) Date of filing: **23.11.2018**

(51) International Patent Classification (IPC):
***H02H 3/00*** *(2006.01)*    ***H02H 3/40*** *(2006.01)*

(52) Cooperative Patent Classification (CPC):
**H02H 3/40; H02H 3/006**

(54) **METHOD AND APPARATUS FOR DISTANCE PROTECTION OF THREE-PHASE ELECTRIC LINE**

VERFAHREN UND VORRICHTUNG ZUM DISTANZSCHUTZ EINER DREIPHASIGEN
ELEKTRISCHEN LEITUNG

PROCÉDÉ ET APPAREIL POUR UNE PROTECTION À DISTANCE DE LIGNE ÉLECTRIQUE
TRIPHASÉE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**27.05.2020 Bulletin 2020/22**

(73) Proprietor: **ABB Schweiz AG
5400 Baden (CH)**

(72) Inventor: **Vanhala, Kari
65320 Vaasa (FI)**

(74) Representative: **Kolster Oy Ab
(Salmisaarenaukio 1)
P.O. Box 204
00181 Helsinki (FI)**

(56) References cited:
**US-A- 5 796 258      US-A1- 2014 236 502
US-B1- 6 239 959**

**Description**

FIELD OF THE INVENTION

The present invention relates to a method and an apparatus for distance protection of a three-phase electric line.

BACKGROUND OF THE INVENTION

Distance relays with various types of operation characteristics may be used for protection against faults, such as phase-to-earth faults and for phase-to-phase faults, located along the protected circuit. The operation characteristics of such relays may define a fixed fault operate region (or trip region), which may be a closed area delimited by several straight lines, typically representative of resistance and reactance settings, for example. This type of operation characteristic is commonly called a quadrilateral characteristic even though in practice it may have more than four lines delimiting the operate region.

Such polygonal operation characteristics may be generally divided into two types, namely to non-directional and directional operation characteristics. The directional operation characteristic may be considered a kind of subsystem of the non-directional operation characteristic. The non-directional polygonal operation characteristic may have sixteen corner points, while only eight corner points can define a directional polygonal operation characteristic, for example. The naming 'quadrilateral characteristic' refers to just four corner points but in practice such a characteristic may have e.g. eight corner points and thus could be better referred to as a polygonal characteristic.

Unlike a circular operation characteristic, such as the so-called Mho type characteristic, the quadrilateral or generally polygonal operation characteristic may be desirable for its ability to detect high resistance faults, for instance. To a system operator the operation characteristic may be an essential tool for the evaluation of the behaviour of the distance protection. In the operation characteristic the relay characteristics and e.g. the measured load and fault impedance may be represented in the complex R (resistance) - X (reactance) - plane, i.e. impedance plane, for example, or in some equivalent manner.

Such a polygonal operation characteristic may be formed based on one or more characteristic quantities the values of which may be received as a setting from the user or operator of the electric circuit to be protected, for example. Such setting values may comprise a setting value of a tilt angle of at least one of the lines defining the operation characteristic. As an example, a reactive reach provided by the operation characteristic can be adjusted by tilting a top reactance boundary line, or at least a portion thereof, by an angle with a corresponding tilt angle setting, TiltA.

US 2014/0236502 discloses an example of an electrical power system phase and ground protection using an adaptive quadrilateral characteristic. The disclosed solution comprises a quadrilateral distance module configured to detect fault conditions using an impedance function by comparing power system impedance levels to a quadrilateral characteristic. The quadrilateral distance module may comprise a reactance module, a resistance module, and/or a directional module. The reactance module may be adaptive to address overreach due to fault resistance and/or load flow conditions. An adaptation of a reactance element generated by the reactance module may comprise "tilting" the adaptive reactance element with respect to impedance.

A problem related to this kind of solution is that the setting value for the tilt angle provided by the user or operator, for example, may be inappropriate such that the resulting lines of the polygonal operation characteristic do not form a closed loop and consequently the operate region will remain open.

BRIEF DESCRIPTION OF THE INVENTION

An object of the present invention is thus to provide a method and an apparatus for implementing the method so as to overcome the above problem or at least to alleviate the above disadvantages. The objects of the invention are achieved by a method, computer program product, and an apparatus, which are characterized by what is stated in the independent claims. The preferred embodiments of the invention are disclosed in the dependent claims.

The invention is based on realizing the problem and on the idea of adjusting the value of the tilt angle of at least one of the lines defining the operation characteristic from a received setting value to the nearest value that results in the operation characteristic defining a closed area or to the nearest value that results in the operation characteristic defining a closed area added with a predetermined margin beyond said nearest value.

An advantage of the solution of the invention is that it enables to achieve a polygonal operation characteristic defining a closed operate region while deviating from the received setting values only as little as possible.

BRIEF DESCRIPTION OF THE DRAWINGS

In the following the invention will be described in greater detail by means of preferred embodiments with reference to the accompanying drawings, in which

Figure 1 shows a simplified diagram illustrating an example of an electric network;
Figure 2 shows an example of an operation characteristic according to an embodiment;
Figure 3 shows an example of an operation characteristic according to an embodiment;
Figure 4 shows an example of an operation characteristic according to an embodiment;
Figure 5 shows an example of an operation characteristic according to an embodiment;
Figure 6 shows an example of an operation characteristic according to an embodiment;
Figure 7 shows a flow diagram according to an embodiment;
Figure 8 shows a flow diagram according to an embodiment; and
Figure 9 shows a flow diagram according to an embodiment.

DETAILED DESCRIPTION OF THE INVENTION

The application of the various embodiments described herein is not limited to any specific system, but it can be used in connection with various three-phase electric systems for distance protection of a three-phase electric line. The electric line can be a feeder of an electric network, for example, and it may be an overhead-line or a cable or a combination thereof. Such an electric network can be an electric transmission or distribution network or a part thereof, for example, and may comprise several feeders or sections. Moreover, the use of the various embodiments is not limited to systems employing 50 Hz or 60 Hz fundamental frequencies or to any specific voltage level, for instance.

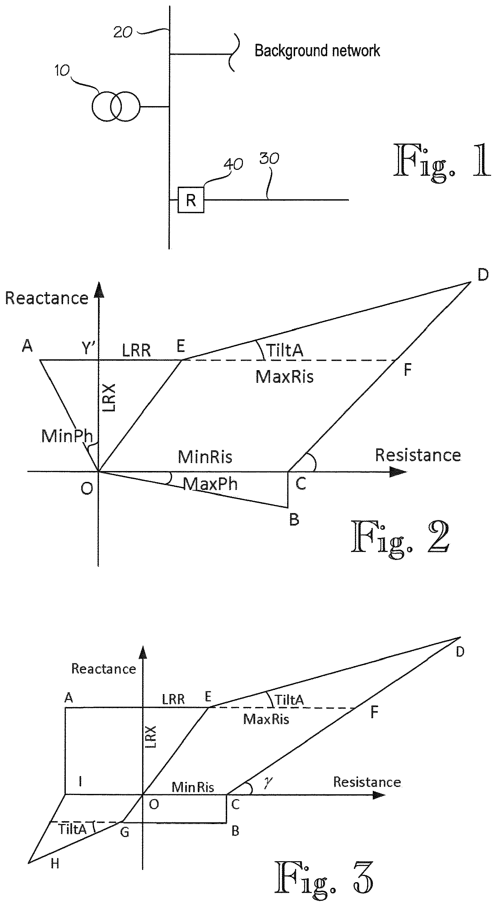

Figure 1 is a simplified diagram illustrating an electric power network. The figure shows only components necessary for understanding the various embodiments. The exemplary power network can be a medium voltage (e.g. 20 kV) distribution network fed through a substation comprising a transformer 10 and a busbar 20. The exemplary network also comprises electric line outlets, i.e. feeders, of which one 30 is shown separately. Other possible feeders as well as other network parts, except the line 30, are referred to as a 'background network'. The figure also shows a protective relay unit 40 at the beginning of the electric line 30. The protective relay unit 40 may be located inside the substation. It should be noted that there may be any number of feeders or other network elements in the electric network. There may also be several feeding substations. Further, the exemplary electric network could be fed through a switching station without a transformer 10, for example. The electric network is a three-phase network, although, for the sake of clarity, the phases are not shown in the figure. In the exemplary system of Figure 1, the functionality of the various embodiments described herein may be at least partly located in the relay unit 40, for example. It is also possible that, for instance, only some measurements are performed at the location of the relay unit 40 and the results are then transmitted to some other unit or units (not shown in the figure) in another location for further processing. In other words, the relay unit 40 could be a mere measuring unit, while the functionality of the various embodiments, or part of it, could be located in some other unit or units or generally distributed among two or more physical units instead of just one physical unit.

Current and voltage values that may be needed in the following embodiments may be obtained by a suitable measuring arrangement including e.g. current and voltage transducers (not shown in the figures). In most of the existing protection systems associated with electric power networks, such values are readily available and thus the implementation of the various embodiments does not necessarily require any additional measuring arrangements.

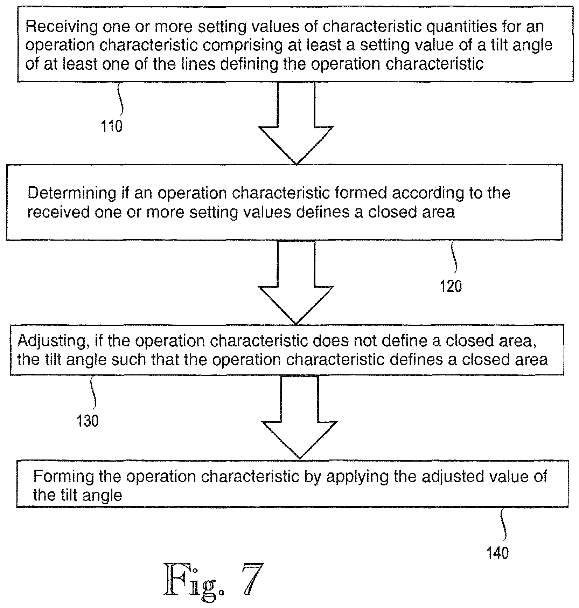

Figure 7 shows a flow diagram according to an embodiment. According to an embodiment, distance protection of the three-phase electric line comprises receiving 110 one or more setting values of characteristic quantities for forming a polygonal operation characteristic which, when represented on an impedance plane, is defined by at least four lines, the one or more setting values comprising at least a setting value of a tilt angle of at least one of the lines defining the operation characteristic and then determining 120 if an operation characteristic formed according to the received one or more setting values defines a closed area. Moreover, in response to determining that the operation characteristic formed according to the received one or more setting values does not define a closed area, a value of said tilt angle of at least one of the lines defining the operation characteristic is adjusted 130 from the received setting value to a nearest value that results in the operation characteristic defining a closed area or to the nearest value that results in the operation characteristic defining a closed area added with a predetermined margin beyond said nearest value. According to an embodiment, the possible predetermined margin may be selected based on system characteristics in order to guarantee that the operation characteristic defines a closed area, i.e. operate region, for example. Finally, the operation characteristic may be formed 140 by applying the thus obtained adjusted value of the tilt angle.

According to an embodiment, the formed operation characteristic may be then used in the distance protection of the three phase electric line 30. The distance protection may include distance protection for phase-to-earth faults and/or for phase-to-phase faults. Consequently, the operation characteristic may be for directional distance protection or for non-directional distance protection. Moreover, the distance protection may involve more than one operation characteristics, which may be applied to different types of fault and/or different zones of the distance protection, for instance.

According to an embodiment, the using of the formed operation characteristic in the distance protection of the three phase electric line 30 may comprise comparing an impedance of the three phase electric line determined at a measuring point 40 on the three phase electric line 30, or a quantity indicative thereof, to the formed operation characteristic to detect a fault on the three-phase electric line. The impedance of the three phase electric line may be determined according to the fault type in question, for example, and may be determined essentially continuously. According to an embodiment, said comparing may comprise determining if the determined impedance of the three phase electric line is inside or outside said closed area defined by the operation characteristic on the impedance plane, and detecting a fault on the three-phase electric line 30 in response to determining that the determined impedance of the three phase electric line is inside said closed area defined by the operation characteristic on the impedance plane. According to an embodiment, one or more switching devices may be controlled in response to detecting a fault on the three-phase electric line 30. Such one or more switching devices may be located in connection with the measuring point 40, for example. Such controlling of one or more switching devices may include switching off the electric line 30 from the feeding point 10 of the electric network, for instance. According to an embodiment, additionally or alternatively an alarm can be given to an operator of the electric system in response to detecting a fault on the three-phase electric line 30. According to an embodiment, the operation characteristic is formed before starting to determine the impedance of the three phase electric line at the measuring point on the three phase electric line.

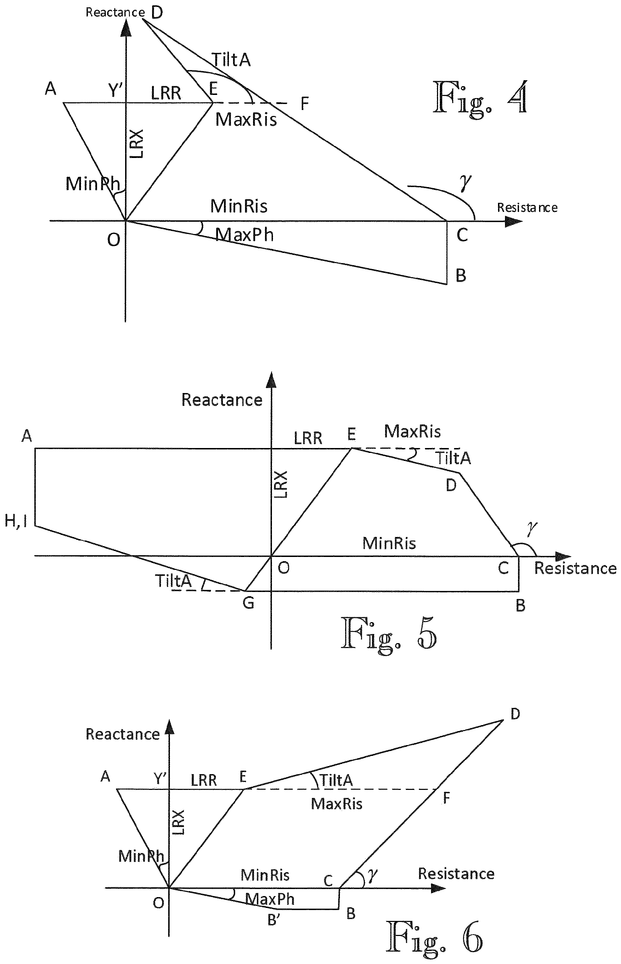

Figures 2 to 6 show examples of polygonal operation characteristics according to various embodiments. The exemplary operation characteristics of Figures 2 and 4 define a closed operate region which is limited by lines OA, AE (AY'E), ED, DF, FC, CB, and BO. The exemplary operation characteristic of Figure 3 in turn defines a closed operate region which is limited by lines AE , ED, DF, FC, CB, BG, GH, HI, and IA. In the exemplary operation characteristic of Figure 5, corner points H and I are the same and thus a closed operate region is limited by lines AE , ED, DC, CB, BG, GH (GI) HA (IA). The exemplary operation characteristics of Figure 6 defines a closed operate region which is limited by lines OA, AE (AY'E), ED, DF, FC, CB, BB' and B'O. The examples also show some possible characteristic quantities for forming or defining such a polygonal operation characteristic. As an example, the electric line 30 reach, corresponding to line OE in the polygonal operation characteristics, may be defined with resistive reach LRR and reactive reach LRX. Line reach itself may consist of positive and zero sequence reach elements depending on the fault type itself. Furthermore, in case of non-directional characteristics, a reverse reach may be defined with set magnitude LineReachNeg and angle -180 degrees plus arcus tangent LRX/LRR.

Figure 2 shows an exemplary directional (forward) distance quadrilateral operation characteristic. In the figure horizontal x-axis is the resistance axis while vertical y-axis is the reactance axis, i.e. a typical impedance plane. Reverse directionality can simply be defined by mirroring the forward characteristics to the origin O. Directional characteristics may have one corner at the impedance plane origin (point O). As already defined, line reach is a complex value defined by $LineReach = LRR + j * LRX$ (line OE) $=| LineReach | * \angle LineReach$. Furthermore, there may be settings for additional maximum resistive reach (MaxRis) and minimum resistive reach (MinRis) available. In some circumstances, e.g. for non-directional characteristics, maximum and minimum resistances can be equal. Again, the resistive reach can be set independently for phase-to-earth and for phase-to-phase or three phase elements, for example. In case of phase-to-earth impedance elements, the resistive reach value corresponds to the physical fault resistance between the phase and earth including the arc and earthing resistances. Also TiltA (tilt angle) setting can be seen in the figures. Another possible angle setting is $\gamma$ (gamma) angle. Angle $\gamma$ is equal to $\angle LineReach$ if MaxRis is equal to MinRis. Furthermore, the directionality of the quadrilateral zone may be defined with two independent directional line settings maximum phase angle (MaxPh, $\angle BOC$) and minimum phase angle (MinPh, $\angle AOY'$).

The reactive reach can be adjusted by tilting the top reactance boundary line, i.e ED in the examples, by the tilt angle with the setting TiltA. A negative value of TiltA decreases the operating zone while a positive value increases the operating zone. In other words, TiltA direction may be defined by a mathematical definition such that it increases anti-clockwise and decreases clockwise. A negative value may be used in case of underreaching zones to compensate for a possible overreaching. A positive value may be used in case of overreaching zones to compensate for a possible underreaching. Thus, TiltA setting may be effectively used for converting one corner inwards or outwards to react to a network loading effect, because the load influence can cause zone over-reach, for instance. This setting, however, may require some additional calculation burden, because the relay equipment 40 should be able to react when an inappropriate setting value is provided by the user or operator, for example. Problem arises the operate region will stay open, where the boundary lines of the operate characteristic do not form a closed loop. Referring to Figures 2 and 3, if positive TiltA will be set equal or exceeding $\angle LineReach$, lines ED and CF (or actually its extension) will never intersect and the respective corner will not be closed. One possible way to react would be to force setting TiltA always to zero if the received setting value is set too large. However, this is not preferable because the resulting operation characteristic may deviate significantly from that intended by the user or operator, for example. This is why it can be advantageous to adjust such an inappropriate value of TiltA from the received setting value to a nearest value thereof that results in the operation characteristic defining a closed area or to the nearest value that results in the operation characteristic defining a closed area added with a predetermined margin beyond said nearest value. As a result, possibly only a slight difference to the original setting value will be needed and the shape of the resulting operation characteristic will be changed only as little as necessary. In other words, the shape of the area defined by the resulting operation characteristic will remain almost the same. Thus, with the thus adjusted value it is possible to provide functionality that follows rather accurately the original purpose of that particular setting meant by user or operator.

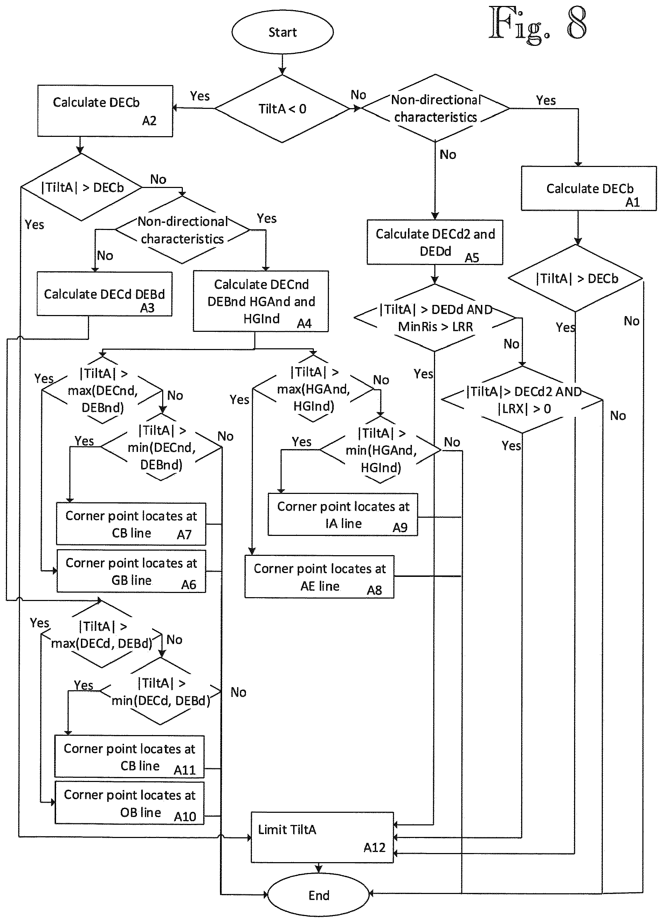

In the following, an example according to one possible embodiment of the management of the tilt angle setting is given with reference to the flow diagram of Figure 8. It should be noted that some steps included in the flow diagram of Figure 8 are not necessary for the management of the tilt angle setting but may be used later for forming the operation characteristic.

According to an embodiment, for all negative TiltA setting values and non-directional positive TiltA setting value characteristics there may be a definite and ultimate limit angle, that can never be exceeded (see e.g. Figures 2, 3, 5, and 6). This extreme limit angle may be defined as an angle, where TiltA rotates original line EF parallel to line OE. As a result, the characteristic either shrinks to a line OE (or OG) or the characteristic will stay open. Another such extreme limit angle may concern directional positive TiltA setting value characteristics where the extreme limit angle may be defined as an angle, where TiltA rotates original line CF parallel to line CE (see Figure 4).

For a non-directional operation characteristic with a positive tilt angle and MaxRis being equal to MinRis an extreme limit angle can be directly calculated A1:

$$\angle \text{DECb} = \angle \text{DEC} = \tan^{-1} \frac{LRX}{LRR}.$$

For a negative tilt angle an extreme limit angle can also be directly calculated A2 from line reach angle:

$$\angle \text{DECb} = \angle \text{DEC} = \tan^{-1} \frac{LRX}{LRR} + 90°.$$

More angles may need to be checked for a non-directional operation characteristic with a negative tilt angle. It can be seen from the figures that corner point C that is originally set to x-axis, will remain there only as long as the extreme limit angle $\angle$DEC will not be exceeded. In that limit corner point D will be equal to corner point C. After that if this limit will be exceeded, corner point C (and also D) will move to line CB until the next limit angle $\angle$DEB will be reached. And after exceeding that angle limit, all corner points D, C and B will move towards origin on line OB. For a non-directional operation characteristic (see Figure 2) the reverse reach will typically be defined by magnitude LineReachNeg (line OG length) with the same effective line reach angle (with 180 degrees phase shift) so that it will be LineReachNeg * $\angle$LineReach = LRRNeg + j * LRXNeg. LineReachNeg is inherently a negative value emphasizing that it has a full 180 degrees phase shift to LineReach. However, already in the definition above and within equations hereafter this can be considered more mathematically by a pure positive value. Only for actual implementation later it might be more practical to have a negative value for this variable. All this deduction confirms that the extreme limit angle for the tilt angle will be angle $\angle$DEO = zDECb. For a non-directional operation characteristic also $\angle$HGI, $\angle$HGO = $\angle$DECb (calculated already in step A2) and $\angle$HGA have to be defined, respectively. For a non-directional operation characteristic these limit angles are:

$$\angle \text{DEBnd} = \angle \text{DEB} = \tan^{-1} \frac{LRXNeg - LRX}{MinRis - LRR} , A4$$

$$\angle \text{DECnd} = \angle \text{DEC} = \tan^{-1} \frac{LRX}{MinRis - LRR} , A4$$

$\angle$DECb, A2

$$\angle \text{HGInd} = \angle \text{HGI} = \tan^{-1} \frac{-LRX * LRXNeg}{LRX * MinRis - LRR * LRXNeg} , A4$$

$$\angle \text{HGAnd} = \angle \text{HGA} = \tan^{-1} \frac{LRXNeg - LRX}{MinRis + \frac{LRR * LRXNeg}{LRX}} , A4$$

A straightforward way is then to sort these angles from the largest to the smallest and then simple angle comparisons give conditions for possible corner point locations during calculation.

For a negative tilt angle only extreme limit angle exceeding will result to set tilt angle restriction to a somewhat larger angle value A12. Furthermore, in that case, the characteristic has shrank to a line EG. If the extreme angle limit has not been exceeded, another two angle limits ∠DEBnd and ∠DECnd have to be checked. For the forward direction, TiltA exceeding max(∠DEBnd, ∠DECnd) indicates that interception point locates at Q4 (here Q4 is the fourth quadrant on the impedance plane, where resistance is positive and reactance is negative - other quadrants follow the same rules) GB line A6, while TiltA exceeding min(∠DEBnd, ∠DECnd) indicates interception point turned to Q4 minimum resistance CB line A7. For the reverse direction, TiltA exceeding max(∠HGInd, ∠HGAnd) indicates that interception point to Q2 line (Q2 is the second quadrant on the impedance plane, where resistance is negative and reactance is positive) AE line A8, while TiltA exceeding min(∠HGInd, ∠HGAnd) indicates that has turned interception point to Q2 minimum resistance IA line A9. Otherwise, corner point locates at original CF (HI) line, respectively.

For a positive tilt angle ∠DEC exceeding or equality results to set angle correction by a pre-defined correction angle optionally with some absolute hysteresis angle A12. Moreover, it is preferable to check that this new tilt angle will not become negative.

For a directional operation characteristic limit angles for a negative tilt angle will be:

$$\angle \text{DEBd} = \angle \text{DEB} = \tan^{-1} \frac{LRX + MinRis * \tan MaxPhA}{MinRis - LRR}, A3$$

$$\angle \text{DECd} = \angle \text{DEC} = \tan^{-1} \frac{LRX}{MinRis - LRR}, A3$$

∠DECb, A2

For a negative tilt angle only extreme limit angle exceeding will result to set tilt angle restriction to a somewhat larger angle value A12. Again, EG zone has shrank to a line there. Another angle limit exceeding modify figure. TiltA exceeding max(∠DEBd, ∠DECd) indicates that interception point locates at Q4 OB line A10, while TiltA exceeding min(∠DEBd, ∠DECd) indicates interception point turned to Q4 minimum resistance CB line A11.

For a directional operation characteristic limit angles for positive tilt angle equations will be the following. Here it is possible to enlarge the tilt angle much larger than 90° and with MinRis larger than MaxRis ∠DEC can be a very sharp angle. This can be easily visualized in Figure 4 by moving corner point D to the left even to quadrant Q2. Here it is possible that D transfers to quadrant Q2 and reactance reach for this point will be negative. This should be preferably taken into account in a suitable manner. Although possible, this case is not common in commercial power networks. For this reason a new equation ∠DED may take place here:

$$\angle \text{DEDd} = \angle \text{DED} = 90° + \tan^{-1} \frac{MinRis - LRR}{LRX}, A5$$

$$\angle \text{DECd2} = \angle \text{DEC} = \tan^{-1} \frac{LRX}{LRR + MaxRis - MinRis}, A5$$

As already explained, for a directional operation characteristic with a positive TiltA the extreme limit angle may be defined as an angle, where TiltA rotates original line CF parallel to line CE. This extreme limit angle exceeding with an additional requirement MinRis > LRR will result to set the tilt angle restriction in step A12. The second limit may be ∠DECd2 with an additional requirement being |LRX| > 0 resulting TiltA to be restricted below ∠DECd2. Furthermore, as already explained, it is preferable to consider the case, where D may transfer to quadrant Q2 and reactance reach for this point will be negative.

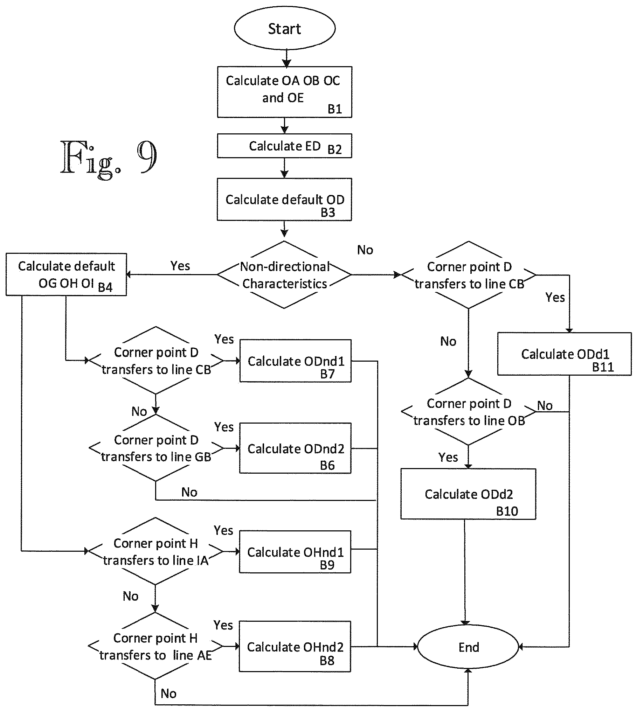

In the following, an example according to one possible embodiment of the forming of the operation characteristic is given with reference to the flow diagram of Figure 9.

According to an embodiment, corner points A, E, C, B, G and I can be calculated with a simple trigonometric arithmetic B1, B4. Also, with tilt angle zero F can be easily calculated. Furthermore, current convention is to calculate zone characteristics during the code execution phase based on given settings. Consequently, especially large amount of troubles and heavy code execution burden will be achieved during code execution phase whether tilt angle setting results some or all of corner points B, C, D and/or F to be combined. An example of that complexity can be seen for example in Figure 5. This typical zone shape illustrates the complexity of doing all calculation during the execution compared to simple measured impedance comparison to pre-calculated corner points and line slopes between them during the code execution phase. Furthermore, it is advantageous to take into account all border conditions given by different settings simultaneously when the tilt angle setting can modify the original zone characteristics even rather radically.

As explained, it is rather straightforward to draw corner points for tilt angle zero (then D equals F). However, for other tilt angles (except the already presented case for parallel lines OE and CD), the corner point D can be easily solved by using cosine sentence and then solving B2 vector ED that is:

$$ED = maxRis * [(1 + \frac{\tan(TiltA)}{\tan\beta - \tan(TiltA)}) + j * \frac{\tan\beta * \tan(TiltA)}{\tan\beta - \tan(TiltA)}],$$

where $tan\beta = \frac{imag(CF)}{real(CF)}$ .

After solving ED also default OD and OH can be calculated B3, B4 by:

$$OD = OE + ED, \qquad if\ tiltA <> 90°$$

$$OD = real(OE), \qquad if\ tiltA = 90°$$

$$OH = OG - ED, \qquad if\ tiltA <> 90°$$

$$OH = real(OG), \qquad if\ tiltA = 90°$$

Some equations may be further needed for solving corner points when limit angles are exceeded and now we continue by presenting these equations.

For a non-directional operation characteristic following equations can be useful:

If corner point D transfers to line CB A7, B7, then

$$ODnd1 = OD = MinRis - j * (MinRis - LRR) * -\tan(TiltA) - LRX.$$

Furthermore, if corner point D transfers to line GB A6, B6, then

$$ODnd2 = OD = LRR - \frac{LRX + LRXNeg}{\tan(TiltA)} - j * LRX.$$

And if the tilt angle has transferred the interception point to Q2 minimum resistance (IA) line then A9, B9:

$$OHnd1 = OH = -MinRis + j * ((-MinRis + \frac{LRR * LRXNeg}{LRX}) * \tan(TiltA) - LRXNeg).$$

And finally, if interception point has been moved to line AE then A8, B8:

$$OHnd2 = OH = \frac{LRX * LRXNeg}{-LRX} + \frac{LRXNeg - LRX}{\tan(TiltA)} + j * LRX.$$

For a directional operation characteristic following equations can be useful:

If corner point D transfers to line CB A11, B11, then

$$ODd1 = OD = MinRis + j * (MinRis - LRR) * \tan(TiltA) + LRX.$$

Furthermore, if corner point D will be transferred to line OB A10, B10, then we have

$$ODd2 = OD = \frac{LRR - LRX}{\tan(tiltA)} * \left(1 + \frac{tanMaxPh}{-\tan(tiltA) - tanMaxPh}\right) -$$

$$j * \left(\frac{tanMaxPh}{-\tan(tiltA) - tanMaxPh} * (LRR * -\tan(tiltA) + LRX)\right).$$

And whether corner point OD is located at negative OB-line after this last calculation, then it should be reset to zero.

Hence we can form a quadrilateral operation characteristic with either eight-corner points for a directional characteristic or sixteen-corner points for a non-directional characteristics. Due to figure modification some of the corner points can be the same and final shape of the characteristic can even be a triangular or square. However, an efficient way to implement these points also then is to use static vector lengths. Of course, also dynamic vector where corner point number differ from 8 or 14 can be given, but it does not change the method principles given herein. In Figure 5 an exemplary operation a characteristic is presented, where MinRis exceeding MaxRis resulting CD slope need in zone definition. Another interesting phenomenon is that corner point I (and H too) has been moved from y-coordinate axis to Q2 quadrant and coordinate axis interception point is less than set negative MinRis. It can be concluded that with such fixed vector corner points together with main slopes here, namely tan(TiltA), CD slope and HI slope (HI slope for non-directional reverse direction can have different value when compared to CD slope) it is possible to introduce a very effective method to decide if the calculated impedance locates inside or outside operate zone.

One possible exception for a directional operation characteristic is that corner point B will not be defined by MaxPh and MaxRis alone, if set negative reactance value is smaller than line CB length and this effectively either creates an additional B' corner point presented in the example of Figure 6. However, this reactance reach requirement can also be checked separately in the implementation phase, for example. In some applications there may be a requirement that the quadrilateral operation characteristic can be turned by some defined degree amount for example with origin as a pivot point and this is rather easy to be done for the pre-calculated corner points.

An apparatus according to any one of the embodiments described herein, or a combination thereof, may be implemented as a single unit or as two or more units that are configured to implement the functionality of the various embodiments. Here the term 'unit' refers generally to a physical or logical entity, such as a physical device or a part thereof or a software routine. One or more of these units may reside in the protective relay unit 40, for example.

An apparatus according to any one of the embodiments may be implemented by means of a computer or corresponding digital signal processing equipment provided with suitable software, for example. Such a computer or digital signal processing equipment preferably comprises at least a working memory (RAM) providing storage area for arithmetical operations and a central processing unit (CPU), such as a general-purpose digital signal processor. The CPU may comprise a set of registers, an arithmetic logic unit, and a control unit. The control unit is controlled by a sequence of program instructions transferred to the CPU from the RAM. The control unit may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The computer may also have an operating system which may provide system services to a computer program written with the program instructions. The computer or other apparatus implementing the invention further preferably comprises suitable input means for receiving e.g. measurement and/or control data, which input means thus enable e.g. the receiving of the setting values and e.g. monitoring of current and voltage quantities of the electric system, and output means for outputting e.g. fault alarms and/or control data e.g. for controlling protection equipment such as switches, disconnectors and circuit-breakers. It is also possible to use a specific integrated circuit or circuits, and/or discrete components and devices for implementing the functionality according to any one of the embodiments.

The invention can be implemented in existing system elements, such as various protective relays or similar devices, or by using separate dedicated elements or devices in a centralized or distributed manner. Present protective devices for electric systems, such as protective relays, typically comprise processors and memory that can be utilized in the functions according to embodiments of the invention. Thus, all modifications and configurations required for implementing an embodiment of the invention e.g. in existing protective devices may be performed as software routines, which may be implemented as added or updated software routines. If the functionality of the invention is implemented by software, such software can be provided as a computer program product comprising computer program code which, when run on a computer, causes the computer or corresponding arrangement to perform the functionality according to the invention as described above. Such a computer program code may be stored or generally embodied on a computer readable medium, such as suitable memory means, e.g. a flash memory or a disc memory from which it is loadable to the unit or units executing the program code. In addition, such a computer program code implementing the invention may be loaded to the unit or units executing the computer program code via a suitable data network, for example, and it may replace or update a possibly existing program code.

It will be obvious to a person skilled in the art that, as the technology advances, the inventive concept can be implemented in various ways. The invention and its embodiments are not limited to the examples described above but may vary within the scope of the claims.

**Claims**

1.  A method for distance protection of a three-phase electric line, the method comprising:

    receiving (110) one or more setting values of characteristic quantities for forming a polygonal operation characteristic which, when represented on an impedance plane, is defined by at least four lines, the one or more setting values comprising at least a setting value of a tilt angle of at least one of the lines defining the operation characteristic,
    **characterized in that** the method comprises:

    determining (120) if an operation characteristic formed according to the received one or more setting values defines a closed area; and
    in response to determining that the operation characteristic formed according to the received one or more setting values does not define a closed area, adjusting (130) a value of said tilt angle of at least one of the lines defining the operation characteristic to a nearest value that results in the operation characteristic defining a closed area or to the nearest value that results in the operation characteristic defining a closed area added with a predetermined margin beyond said nearest value, and forming (140) the operation characteristic by applying the thus obtained adjusted value of the tilt angle.

2.  A method according to claim 1, comprising using the formed operation characteristic in the distance protection of the three phase electric line (30).

3.  A method according to claim 2, the using comprising comparing an impedance of the three phase electric line (30) determined at a measuring point (40) on the three phase electric line, or a quantity indicative thereof, to the formed operation characteristic to detect a fault on the three-phase electric line.

4.  A method according to claim 3, the comparing comprising:

    determining if the determined impedance of the three phase electric line (30) is inside or outside said closed area defined by the operation characteristic on the impedance plane; and
    detecting a fault on the three-phase electric line (30) when the determined impedance of the three phase electric line is determined to be inside said closed area defined by the operation characteristic on the impedance plane.

5.  A method according to any one of claims 1 to 4, wherein the operation characteristic is for phase-to-earth faults or for phase-to-phase faults.

6.  A method according to any one of claims 1 to 5, wherein the operation characteristic is for directional distance protection or for non-directional distance protection.

7.  A method according to any one of claims 1 to 5, wherein the operation characteristic is formed before starting to determine the impedance of the three phase electric line (30) at the measuring point (40) on the three phase electric line.

8.  A computer program product comprising computer program code, wherein execution of the program code in a computer causes the computer to carry out the steps of the method according to any one of claims 1 to 7.

9. An apparatus for distance protection of a three-phase electric line, the apparatus comprising processing means (40) configured to:

receive one or more setting values of characteristic quantities for forming a polygonal operation characteristic which, when represented on an impedance plane, is defined by at least four lines, the one or more setting values comprising at least a setting value of a tilt angle of at least one of the lines defining the operation characteristic, **characterized in that** the processing means (40) are configured to:

determine if an operation characteristic formed according to the received one or more setting values defines a closed area; and
in response to determining that the operation characteristic formed according to the received one or more setting values does not define a closed area, adjust a value of said tilt angle of at least one of the lines defining the operation characteristic to a nearest value that results in the operation characteristic defining a closed area or to the nearest value that results in the operation characteristic defining a closed area added with a predetermined margin beyond said nearest value, and form the operation characteristic by applying the thus obtained adjusted value of the tilt angle.

10. An apparatus according to claim 9, the apparatus being configured to use the formed operation characteristic in the distance protection of the three phase electric line (30).

11. An apparatus according to claim 10, the apparatus comprising measuring means (40) configured to measure an impedance of the three phase electric line (30), or a quantity indicative thereof, at a measuring point (40) on the three phase electric line,
wherein the processing means (40) are configured to compare the measured impedance of the three phase electric line (30), or the quantity indicative thereof, to the formed operation characteristic to detect a fault on the three-phase electric line.

12. An apparatus according to claim 11, wherein the processing means (40) are configured to:

determine if the measured impedance of the three phase electric line (30) is inside or outside said closed area defined by the operation characteristic on the impedance plane; and
detect a fault on the three-phase electric line (30) when the measured impedance of the three phase electric line is determined to be inside said closed area defined by the operation characteristic on the impedance plane.

13. An apparatus according to any one of claims 9 to 12, wherein the operation characteristic is for phase-to-earth faults or for phase-to-phase faults.

14. An apparatus according to any one of claims 9 to 13, wherein the operation characteristic is for directional distance protection or for non-directional distance protection.

15. An apparatus according to any one of claims 9 to 14, wherein processing means (40) are configured to form the operation characteristic before the measuring means start to determine the impedance of the three phase electric line (30) at the measuring point (40) on the three phase electric line.


**Patentansprüche**

1. Verfahren für einen Abstandsschutz einer dreiphasigen Stromleitung, wobei das Verfahren Folgendes umfasst:

Empfangen (110) von einem oder mehreren Einstellwerten von Charakteristikmengen zum Bilden einer polygonalen Betriebscharakteristik, die, wenn sie auf einer Impedanzebene repräsentiert wird, durch mindestens vier Leitungen definiert wird, wobei der eine oder die mehreren Einstellwerte mindestens einen Einstellwert eines Neigungswinkels von mindestens einer der Leitungen,
die die Betriebscharakteristik definieren, umfassen, **dadurch gekennzeichnet, dass** das Verfahren Folgendes umfasst:

Bestimmen (120), ob eine Betriebscharakteristik, die gemäß dem einen oder den mehreren empfangenen Einstellwerten gebildet ist, einen geschlossenen Bereich definiert; und

in Reaktion auf das Bestimmen, dass die Betriebscharakteristik, die gemäß dem einen oder den mehreren empfangenen Einstellwerten gebildet ist, keinen geschlossenen Bereich definiert, Anpassen (130) eines Wertes des Neigungswinkels von mindestens einer der Leitungen, die die Betriebscharakteristik definieren, auf einen nächsten Wert, der darin resultiert, dass die Betriebscharakteristik einen geschlossenen Bereich definiert, oder den nächsten Wert, der darin resultiert, dass die Betriebscharakteristik einen geschlossenen Bereich mit einer hinzugefügten vorbestimmten Marge über den nächsten Wert hinaus definiert, und Bilden (140) der Betriebscharakteristik durch Anwenden des so erhaltenen angepassten Wertes des Neigungswinkels.

2. Verfahren nach Anspruch 1, das das Verwenden der gebildeten Betriebscharakteristik beim Abstandsschutz der dreiphasigen Stromleitung (30) umfasst.

3. Verfahren nach Anspruch 2, wobei das Verwenden das Vergleichen einer Impedanz der dreiphasigen Stromleitung (30), die an einem Messpunkt (40) an der dreiphasigen Stromleitung bestimmt wird, oder einer Menge, die dieselbe anzeigt, mit der gebildeten Betriebscharakteristik umfasst, um einen Fehler an der dreiphasigen Stromleitung zu detektieren.

4. Verfahren nach Anspruch 3, wobei das Vergleichen Folgendes umfasst:

Bestimmen, ob die bestimmte Impedanz der dreiphasigen Stromleitung (30) innerhalb oder außerhalb des geschlossenen Bereichs liegt, der durch die Betriebscharakteristik in der Impedanzebene definiert wird; und
Detektieren eines Fehlers an der dreiphasigen Stromleitung (30), wenn bestimmt wird, dass die bestimmte Impedanz der dreiphasigen Stromleitung innerhalb des geschlossenen Bereichs liegt, der durch die Betriebscharakteristik auf der Impedanzebene definiert wird.

5. Verfahren nach einem der Ansprüche 1 bis 4, wobei die Betriebscharakteristik für Phase-Masse-Fehler oder für Phase-Phase-Fehler gilt.

6. Verfahren nach einem der Ansprüche 1 bis 5, wobei die Betriebscharakteristik für einen gerichteten Abstandsschutz oder für einen ungerichteten Abstandsschutz gilt.

7. Verfahren nach einem der Ansprüche 1 bis 5, wobei die Betriebscharakteristik gebildet wird, bevor das Bestimmen der Impedanz der dreiphasigen Stromleitung (30) am Messpunkt (40) an der dreiphasigen Stromleitung begonnen wird.

8. Computerprogrammprodukt, das Computerprogrammcode umfasst, wobei die Ausführung des Programmcodes in einem Computer bewirkt, dass der Computer die Schritte des Verfahrens nach einem der Ansprüche 1 bis 7 umsetzt.

9. Vorrichtung für einen Abstandsschutz einer dreiphasigen Stromleitung, wobei die Vorrichtung ein Verarbeitungsmittel (40) umfasst, das zu Folgendem ausgelegt ist:

Empfangen von einem oder mehreren Einstellwerten von Charakteristikmengen zum Bilden einer polygonalen Betriebscharakteristik, die, wenn sie auf einer Impedanzebene repräsentiert wird, durch mindestens vier Leitungen definiert wird, wobei der eine oder die mehreren Einstellwerte mindestens einen Einstellwert eines Neigungswinkels von mindestens einer der Leitungen,
die die Betriebscharakteristik definieren, umfassen, **dadurch gekennzeichnet, dass** das Verarbeitungsmittel (40) zu Folgendem ausgelegt ist:

Bestimmen, ob eine Betriebscharakteristik, die gemäß dem einen oder den mehreren empfangenen Einstellwerten gebildet ist, einen geschlossenen Bereich definiert; und
in Reaktion auf das Bestimmen, dass die Betriebscharakteristik, die gemäß dem einen oder den mehreren empfangenen Einstellwerten gebildet ist, keinen geschlossenen Bereich definiert, Anpassen eines Wertes des Neigungswinkels von mindestens einer der Leitungen, die die Betriebscharakteristik definieren, auf einen nächsten Wert, der darin resultiert, dass die Betriebscharakteristik einen geschlossenen Bereich definiert, oder den nächsten Wert, der darin resultiert, dass die Betriebscharakteristik einen geschlossenen Bereich mit einer hinzugefügten vorbestimmten Marge über den nächsten Wert hinaus definiert, und Bilden der Betriebscharakteristik durch Anwenden des so erhaltenen angepassten Wertes des Neigungswinkels.

10. Vorrichtung nach Anspruch 9, wobei die Vorrichtung dazu ausgelegt ist, die gebildete Betriebscharakteristik beim Abstandsschutz der dreiphasigen Stromleitung (30) zu verwenden.

11. Vorrichtung nach Anspruch 10, wobei die Vorrichtung, die das Messmittel (40) umfasst, dazu ausgelegt ist, eine Impedanz der dreiphasigen Stromleitung (30) oder eine Menge, die dieselbe anzeigt, an einem Messpunkt (40) der dreiphasigen Stromleitung zu messen,
wobei das Verarbeitungsmittel (40) dazu ausgelegt ist, die gemessene Impedanz der dreiphasigen Stromleitung (30) oder die Menge, die dieselbe anzeigt, mit der gebildeten Betriebscharakteristik zu vergleichen, um einen Fehler an der dreiphasigen Stromleitung zu detektieren.

12. Vorrichtung nach Anspruch 11, wobei das Verarbeitungsmittel (40) zu Folgendem ausgelegt ist:

Bestimmen, ob die gemessene Impedanz der dreiphasigen Stromleitung (30) innerhalb oder außerhalb des geschlossenen Bereichs liegt, der durch die Betriebscharakteristik in der Impedanzebene definiert wird; und Detektieren eines Fehlers an der dreiphasigen Stromleitung (30), wenn bestimmt wird, dass die gemessene Impedanz der dreiphasigen Stromleitung innerhalb des geschlossenen Bereichs liegt, der durch die Betriebscharakteristik auf der Impedanzebene definiert wird.

13. Vorrichtung nach einem der Ansprüche 9 bis 12, wobei die Betriebscharakteristik für Phase-Masse-Fehler oder für Phase-Phase-Fehler gilt.

14. Vorrichtung nach einem der Ansprüche 9 bis 13, wobei die Betriebscharakteristik für einen gerichteten Abstandsschutz oder für einen ungerichteten Abstandsschutz gilt.

15. Vorrichtung nach einem der Ansprüche 9 bis 14, wobei das Verarbeitungsmittel (40) dazu ausgelegt ist, die Betriebscharakteristik zu bilden, bevor das Messmittel mit dem Bestimmen der Impedanz der dreiphasigen Stromleitung (30) am Messpunkt (40) an der dreiphasigen Stromleitung beginnt.


**Revendications**

1. Procédé pour une protection à distance d'une ligne électrique triphasée, le procédé comprenant :

la réception (110) d'une ou plusieurs valeurs de réglage de grandeurs caractéristiques pour former une caractéristique de fonctionnement polygonale qui,
lorsqu'elle est représentée sur un plan d'impédance, est définie par au moins quatre lignes, la ou les valeurs de réglage comprenant au moins une valeur de réglage d'un angle d'inclinaison d'au moins l'une des lignes définissant la caractéristique de fonctionnement, **caractérisé en ce que** le procédé comprend :

la détermination (120) du fait de savoir si une caractéristique de fonctionnement formée en fonction de la ou des valeurs de réglage reçues définit une zone fermée ; et
en réponse à la détermination du fait que la caractéristique de fonctionnement formée en fonction de la ou des valeurs de réglage reçues ne définit pas une zone fermée, l'ajustement (130) d'une valeur dudit angle d'inclinaison d'au moins l'une des lignes définissant la caractéristique de fonctionnement à une valeur la plus proche qui a pour résultat que la caractéristique de fonctionnement définit une zone fermée, ou à la valeur la plus proche qui a pour résultat que la caractéristique de fonctionnement définit une zone fermée à laquelle s'ajoute une marge prédéterminée au-delà de ladite valeur la plus proche, et la formation (140) de la caractéristique de fonctionnement en appliquant la valeur ajustée ainsi obtenue de l'angle d'inclinaison.

2. Procédé selon la revendication 1, comprenant l'utilisation de la caractéristique de fonctionnement formée dans la protection à distance de la ligne électrique triphasée (30).

3. Procédé selon la revendication 2, l'utilisation comprenant la comparaison d'une impédance de la ligne électrique triphasée (30) déterminée en un point de mesure (40) sur la ligne électrique triphasée, ou d'une grandeur représentative de celle-ci, à la caractéristique de fonctionnement formée pour détecter un défaut sur la ligne électrique triphasée.

4. Procédé selon la revendication 3, la comparaison comprenant :

la détermination du fait de savoir si l'impédance déterminée de la ligne électrique triphasée (30) se situe à l'intérieur ou à l'extérieur de ladite zone fermée définie par la caractéristique de fonctionnement sur le plan d'impédance ; et
la détection d'un défaut sur la ligne électrique triphasée (30) lorsqu'il est déterminé que l'impédance déterminée de la ligne électrique triphasée se situe à l'intérieur de ladite zone fermée définie par la caractéristique de fonctionnement sur le plan d'impédance.

5. Procédé selon l'une quelconque des revendications 1 à 4, dans lequel la caractéristique de fonctionnement est relative à des défauts de phase à terre ou à des défauts de phase à phase.

6. Procédé selon l'une quelconque des revendications 1 à 5, dans lequel la caractéristique de fonctionnement est relative à une protection à distance directionnelle ou à une protection à distance non directionnelle.

7. Procédé selon l'une quelconque des revendications 1 à 5, dans lequel la caractéristique de fonctionnement est formée avant de commencer à déterminer l'impédance de la ligne électrique triphasée (30) au point de mesure (40) sur la ligne électrique triphasée.

8. Produit de programme informatique comprenant un code de programme informatique, dans lequel l'exécution du code de programme dans un ordinateur amène l'ordinateur à exécuter les étapes du procédé selon l'une quelconque des revendications 1 à 7.

9. Appareil pour une protection à distance d'une ligne électrique triphasée, l'appareil comprenant des moyens de traitement (40) configurés pour :

recevoir une ou plusieurs valeurs de réglage de grandeurs caractéristiques pour former une caractéristique de fonctionnement polygonale qui, lorsqu'elle est représentée sur un plan d'impédance, est définie par au moins quatre lignes, la ou les valeurs de réglage comprenant au moins une valeur de réglage d'un angle d'inclinaison d'au moins l'une des lignes définissant la caractéristique de fonctionnement,
**caractérisé en ce que** les moyens de traitement (40) sont configurés pour :

déterminer si une caractéristique de fonctionnement formée en fonction de la ou des valeurs de réglage reçues définit une zone fermée ; et
en réponse à la détermination du fait que la caractéristique de fonctionnement formée en fonction de la ou des valeurs de réglage reçues ne définit pas une zone fermée, ajuster une valeur dudit angle d'inclinaison d'au moins l'une des lignes définissant la caractéristique de fonctionnement à une valeur la plus proche qui a pour résultat que la caractéristique de fonctionnement définit une zone fermée, ou à la valeur la plus proche qui a pour résultat que la caractéristique de fonctionnement définit une zone fermée à laquelle s'ajoute une marge prédéterminée au-delà de ladite valeur la plus proche, et former la caractéristique de fonctionnement en appliquant la valeur ajustée ainsi obtenue de l'angle d'inclinaison.

10. Appareil selon la revendication 9, l'appareil étant configuré pour utiliser la caractéristique de fonctionnement formée dans la protection à distance de la ligne électrique triphasée (30).

11. Appareil selon la revendication 10, l'appareil comprenant des moyens de mesure (40) configurés pour mesurer une impédance de la ligne électrique triphasée (30), ou une grandeur représentative de celle-ci, en un point de mesure (40) sur la ligne électrique triphasée, dans lequel les moyens de traitement (40) sont configurés pour comparer l'impédance mesurée de la ligne électrique triphasée (30), ou la grandeur représentative de celle-ci, à la caractéristique de fonctionnement formée pour détecter un défaut sur la ligne électrique triphasée.

12. Appareil selon la revendication 11, dans lequel les moyens de traitement (40) sont configurés pour :

déterminer si l'impédance mesurée de la ligne électrique triphasée (30) se situe à l'intérieur ou à l'extérieur de ladite zone fermée définie par la caractéristique de fonctionnement sur le plan d'impédance ; et
détecter un défaut sur la ligne électrique triphasée (30) lorsqu'il est déterminé que l'impédance mesurée de la ligne électrique triphasée se situe à l'intérieur de ladite zone fermée définie par la caractéristique de fonctionnement sur le plan d'impédance.

**13.** Appareil selon l'une quelconque des revendications 9 à 12, dans lequel la caractéristique de fonctionnement est relative à des défauts de phase à terre ou à des défauts de phase à phase.

**14.** Appareil selon l'une quelconque des revendications 9 à 13, dans lequel la caractéristique de fonctionnement est relative à une protection à distance directionnelle ou à une protection à distance non directionnelle.

**15.** Appareil selon l'une quelconque des revendications 9 à 14, dans lequel les moyens de traitement (40) sont configurés pour former la caractéristique de fonctionnement avant que les moyens de mesure ne commencent à déterminer l'impédance de la ligne électrique triphasée (30) au point de mesure (40) sur la ligne électrique triphasée.

Fig. 1

Fig. 2

Fig. 3

Fig. 4

Fig. 5

Fig. 6

Receiving one or more setting values of characteristic quantities for an operation characteristic comprising at least a setting value of a tilt angle of at least one of the lines defining the operation characteristic

110

Determining if an operation characteristic formed according to the received one or more setting values defines a closed area

120

Adjusting, if the operation characteristic does not define a closed area, the tilt angle such that the operation characteristic defines a closed area

130

Forming the operation characteristic by applying the adjusted value of the tilt angle

140

Fig. 7

Fig. 8

```
                              ┌───────────┐
                              │   Start   │
                              └─────┬─────┘
                                    │
    ┌──────────────┐   Yes    ◇─────┴─────◇   No    ◇────────────────◇   Yes
    │ Calculate DECb│◄────────│  TiltA < 0  │───────│ Non-directional │───────┐
    │          A2  │          ◇─────────────◇       │  characteristics│       │
    └──────┬───────┘                                ◇────────┬────────◇       │
           │                                                 │ No            │
           ▼                                                 ▼               ▼
    ◇──────────────◇   No                          ┌──────────────────┐  ┌──────────────┐
    │ |TiltA| > DECb│────────┐                      │ Calculate DECd2 and│  │ Calculate DECb│
    ◇──────────────◇         │                      │   DEDd      A5   │  │          A1  │
           │ Yes             ▼                      └─────────┬────────┘  └──────┬───────┘
           │        ◇─────────────────◇   Yes                │                  │
           │        │ Non-directional  │──────┐              ▼                  ▼
           │        │  characteristics │      │     ◇─────────────────◇  ◇──────────────◇
           │        ◇────────┬────────◇      │     │ |TiltA| > DEDd AND│  │ |TiltA| > DECb│
           │                 │ No             │     │   MinRis > LRR   │  ◇──────────────◇
           │                 ▼                ▼     ◇────────┬────────◇         │
           │       ┌──────────────┐  ┌──────────────────┐   │ No         Yes   │  No
           │       │Calculate DECd │  │ Calculate DECnd  │   │ Yes              │
           │       │ DEBd     A3  │  │ DEBnd HGAnd and   │   │         ◇────────┴───────◇
           │       └──────┬───────┘  │ HGInd      A4     │   │         │ |TiltA|> DECd2 AND│ No
           │              │          └─────────┬────────┘   │         │   |LRX| > 0      │──┐
```

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140236502 A